(19) Europäisches Patentamt
European Patent Office
Office européen des brevets

(11) Veröffentlichungsnummer: **0 092 701**
**B1**

(12) **EUROPÄISCHE PATENTSCHRIFT**

(45) Veröffentlichungstag der Patentschrift: **28.01.87**

(51) Int. Cl.⁴: **C 08 G 77/38**, C 08 G 77/06, C 08 G 63/76

(21) Anmeldenummer: **83103340.2**

(22) Anmeldetag: **06.04.83**

(54) **Verfahren zur Herstellung von hitzehärtbaren Siliconharzen.**

(30) Priorität: **22.04.82 DE 3214984**

(43) Veröffentlichungstag der Anmeldung: **02.11.83 Patentblatt 83/44**

(45) Bekanntmachung des Hinweises auf die Patenterteilung: **28.01.87 Patentblatt 87/5**

(84) Benannte Vertragsstaaten: **BE DE FR GB IT NL**

(56) Entgegenhaltungen:
**EP-A-0 008 090**
**EP-A-0 035 274**
**DE-A-2 107 471**
**DE-A-2 521 170**
**DE-A-2 828 990**
**DE-A-2 949 725**
**DE-B-1 253 847**
**DE-B-2 232 419**
**US-A-3 044 979**
**US-A-3 044 980**

**Die Akte enthält technische Angaben, die nach dem Eingang der Anmeldung eingereicht wurden und die nicht in dieser Patentschrift enthalten sind.**

(73) Patentinhaber: **Th. Goldschmidt AG, Goldschmidtstrasse 100 Postfach 101461, D-4300 Essen 1 (DE)**

(72) Erfinder: **Körner, Götz, Dr., Kantorie 126, D-4300 Essen (DE)**
Erfinder: **Priesch, Manfred, Cäcilienhöhe 62, D-4350 Recklinghausen (DE)**
Erfinder: **Rau, Harald, Schmettaustrasse 11, D-4300 Essen (DE)**
Erfinder: **Schamberg, Eckehard, Dr., Grotehang 6, D-4300 Essen (DE)**

**EP 0 092 701 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung eines in organischen Lösungsmitteln löslichen, hitzehärtbaren Siliconharzes durch partielle Umsetzung eines Alkoxysiloxans mit einem mindestens difunktionellen niedermolekularen Polyol, insbesondere in Gegenwart eines Katalysators.

Aus der DE-OS 2 828 990 ist ein Verfahren zur Herstellung von hitzehärtbaren Siliconharzen durch Umsetzung von Alkoxysiloxanen mit polyfunktionellen organischen Hydroxylverbindungen bekannt. Bei diesem Verfahren setzt man Siloxane der allgemeinen Formel

$$\begin{array}{l} R^2_aSi(OR^1)_b \\ \quad | \\ \quad O_{\frac{4-(a+b)}{2}} \end{array}$$

worin

$OR^1$ eine Alkoxygruppe von primären oder sekundären aliphatischen Alkoholen mit 1 bis 4 C-Atomen,

$R^2$ eine Alkyl- und/oder Phenylgruppe ist,

a einen Wert von 1,0 bis 1,5,

b einen Wert von 0,1 bis 0,7 hat,

mit niedermolekularen mehrwertigen Alkoholen bei Temperaturen von 100 bis 160 °C gegebenenfalls in Gegenwart an sich bekannter Umesterungskatalysatoren und Lösungsmittel unter Entfernung des Alkohols $R^1OH$ in einem solchen Mengenverhältnis miteinander um, dass einer $SiOR^1$-Gruppe etwa eine COH-Gruppe entspricht und bricht die Reaktion bei einem Umsetzungsgrad von 25 bis 80% durch Abkühlen auf eine Temperatur < 100 °C ab.

Die $OR^1$-Gruppen sind dabei Methoxy-, Ethoxy-, n- oder iso-Propoxy- oder n-Butoxygruppen. Als niedermolekulare mehrwertige Alkohole werden Ethylenglykol, Trimethylethan, Trimethylolpropan, Neopentylglykol, Glycerin, Pentaerythrit, Dimethylolcyclohexan sowie Gemische dieser Alkohole verwendet.

Die ausgehärteten Siliconharze dieses Verfahrens weisen einen sehr hohen Silicongehalt von 63 bis nahezu 98 Gew.-% auf und besitzen dadurch hohe Thermostabilität und gute Elastizität. Die Produkte können auch in Gegenwart relativ geringer Mengen Lösungsmittel verarbeitet werden. Wegen des hohen Silicongehaltes sind diese Produkte jedoch so thermoplastisch, dass sie sich in hochtemperaturbeständigen Einbrennlacken, z.B. für die dekorative Beschichtung von Haushaltsgeräten, nicht verwenden lassen.

Es fehlte nicht an Vorschlägen, die guten lacktechnischen Eigenschaften von Polyesterharzen, wie insbesondere hohe Oberflächenhärte, geringe Thermoplastizität und gute Chemikalienbeständigkeit, mit den guten Eigenschaften der Siliconharze, wie insbesondere der hohen Thermostabilität, zu kombinieren.

So sind bereits aus der US-PS 3 044 979 siliciumhaltige Polyester bekannt, die aus 70 bis 95 Gew.-% eines Mischhydrolysates von Organochlorsilanen mit 1,0 bis 1,75 organischen Gruppen pro Si-Atom und 30 bis 5 Gew.-% eines Polyesters mit einer Viskosität von 38 000 bis 42 000 cP, welcher aus niedrigen Alkylestern der Isophthalsäure, Terephthalsäure oder deren Mischungen und Ethylenglykol und einem gesättigten, mehrwertigen Alkohol mit mindestens 3 OH-Gruppen im Molekül besteht, hergestellt werden. Auch diese Produkte weisen aber noch eine sehr hohe Thermoplastizität auf, insbesondere bei hohem Silicongehalt, und ausserdem sind durch die hohen Viskositäten Festkörper in der Bindemittellösung von über 50% in der Praxis kaum realisierbar.

Mit Polyestern modifizierte Siliconharze, die im ausgehärteten Zustand hohe Flexibilität und Tiefziehfähigkeit aufweisen, sind in der DE-AS 2 232 419 beschrieben. Bei diesem Verfahren verwendet man gesättigte Polyester mit einer Hydroxylzahl von 60 bis 350 und Polysiloxanblöcke, welche 0,25 bis 0,70 Mol SiOR-Gruppen pro 100 g aufweisen, in bezug auf die reaktiven Gruppen in einem Molverhältnis von 1,25 bis 0,8. Bei Silicongehalten von <50% ist die Thermostabilität dieser Harze jedoch noch unzureichend. Ein wesentlicher Nachteil besteht darin, dass diese modifizierten Siliconharze zur Einstellung der erforderlichen Verarbeitungsviskosität erhebliche Mengen Lösungsmittel benötigen.

Aus der DE-OS 2 521 170 sind Silicon/Polyester-Copolymere bekannt, die besonders für Beschichtungsanwendungen brauchbar sein sollen. Das Verfahren zeichnet sich durch Erhitzen einer Reaktionsmischung aus einem Silanhydrolysat und einem hydroxylgruppenreichen Polyester in Gegenwart eines Glykoletheracylats einer Carbonsäure aus. In dieser DE-OS wird ausgeführt, dass die Produkte dieses Verfahrens im allgemeinen aus etwa 70 bis etwa 95% Silicon, Rest Polyester, zusammengesetzt sind. Ein Copolymer, das z.B. 85,5% Silicon und 12,5% Polyester enthält, ist am meisten bevorzugt. Damit sind diese Verfahrensprodukte aber wegen der Thermoplastizität nicht gut für thermostabile, dekorative Einbrennlackierungen geeignet. In der DE-OS 2 521 170 wird ausserdem darauf hingewiesen, dass im Gegensatz zu dem Verfahren der US-PS 3 044 980, bei dem der Polyester bei der Copolymerisation lösungsmittelfrei verwendet wird, mit Vorteil Lösungsmittel aus der Gruppe der Glykoletheracylate eingesetzt werden sollen. Dabei wird ein Feststoffgehalt von etwa 55 bis 65% empfohlen. Aus diesem Grunde eignen sich auch diese Verfahrensprodukte nicht befriedigend für eine rohstoff- und energiesparende, umweltfreundliche Beschichtung.

Schliesslich ist noch aus der DE-OS 2 949 725 ein Verfahren zur Herstellung von mit Organo(poly)siloxan modifiziertem Polyester durch Umsetzung von verzweigtem, Si-gebundene Alkoxygruppen enthaltendem Organo(poly)siloxan mit alkoholische Hydroxylgruppen enthaltendem Polyester aus mindestens zwei Carboxylgruppen je Molekül enthaltener und von aliphatischen Mehrfachbindungen freier Carbonsäuren und/

oder deren Anhydrid und/oder deren Ester mit 1 bis 4 Kohlenstoffatome enthaltenden Alkanolen und Alkohol mit mindestens zwei Hydroxylgruppen je Molekül als einzigen zur Herstellung vom Polyester verwendeten Reaktionsteilnehmern bekannt. Kennzeichnungsgemäss wird als verzweigtes, Si-gebundene Alkoxygruppen enthaltendes Organo(poly)siloxan ein solches verwendet, dessen SiC-gebundene organische Reste mindestens zu 95% ihrer Anzahl aus Methylresten, von denen jeweils nur ein Rest an ein Si-Atom gebunden ist, und dessen Alkoxygruppen aus Methoxygruppen oder Ethoxygruppen oder Gemischen dieser Alkoxygruppen bestehen und das höchstens 0,5 Gewichtsprozent Si-gebundene Hydroxylgruppen und nach Veraschung mindestens 40 Gewichtsprozent, bezogen auf das Gewicht vom jeweiligen Organo(poly)siloxan vor der Veraschung, $SiO_2$ enthält. Diese Alkoxysiloxane werden mit üblichen Hydroxylgruppen aufweisenden, gesättigten Polyestern umgesetzt. Die verwendeten Polyester sind dabei so hochmolekular, dass zur Einstellung einer geeigneten Viskosität für die Umsetzung mit dem Alkoxypolysiloxan die Polyester auf einen Feststoffgehalt von etwa 60% verdünnt werden müssen. Die Verfahrensprodukte eignen sich zur Beschichtung von beispielsweise Holz, Organopolysiloxanelastomeren oder Aluminium und als Bindemittel für Glimmer, Glasfasern, Steinwolle, Magnesiumoxid oder Siliciumdioxid, insbesondere bei der Herstellung von Elektroisolierstoffen, jedoch nicht zur Herstellung thermisch belastbarer Beschichtungen.

Aus dem vorstehend geschilderten Stand der Technik ergibt sich somit, dass es bekannt ist, alkoxyfunktionelle Organopolysiloxane mit Hydroxylgruppen enthaltenden Polyestern umzusetzen. Die erhaltenen Produkte können zum Teil als Einbrennlacke verwendet werden. Die modifizierten Siliconharze weisen dabei jedoch im allgemeinen eine so hohe Viskosität auf, dass Festkörpergehalte von 60% nicht wesentlich überschritten werden können.

Der vorliegenden Erfindung liegt die Aufgabe zugrunde, solche hitzehärtbaren, modifizierten Siliconharze aufzufinden, die eine so geringe Viskosität haben, dass zur Erreichung der Verarbeitungsviskosität nur geringe Mengen Lösungsmittel erforderlich sind. Die gewünschten Siliconharze sollen nach Möglichkeit nicht mehr als 20% Lösungsmittel zur Einstellung der Verarbeitungsviskosität benötigen. Gleichzeitig sollen aber die guten Gebrauchseigenschaften der modifizierten Siliconharze erhalten bleiben.

Überraschenderweise gelingt die Lösung dieser Aufgabe dadurch, dass man

a) als Alkoxysiloxane eine Verbindung der allgemeinen Formel

$$R^2_aSi(OR^1)_bO_{\frac{4-(a+b)}{2}}$$

verwendet,
wobei

$R^1$ eine niedere Alkylgruppe mit bis zu 4 Kohlenstoffatomen,

$R^2$ eine Alkyl- oder Phenylgruppe,

a = 1,0 bis 1,2,

b = 0,5 bis 1,2 ist,

mit der Massgabe, dass mindestens 50 Gew.-% des Alkoxysiloxans bei 1 bis 15 mbar destillierbar sind, und Siloxane, die der Formel $[R^2Si(OR^1)O]_n$, n = 3 bis 8, entsprechen, bevorzugt sind,

b) als Polyol eine Verbindung der allgemeinen Formel

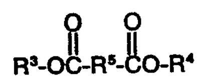

verwendet,
wobei

$R^3$ und $R^4$ gleich oder verschieden sind und die Gruppe

$HO(CH_2)_2$-, 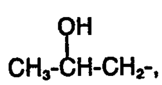, $HO(CH_2)_3$-, 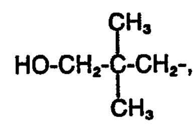,

$(HOCH_2)_3C-CH_2$-, 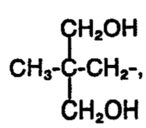, 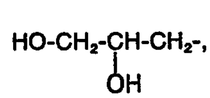,

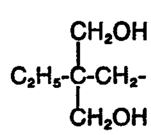 bedeuten, wobei die Gruppen

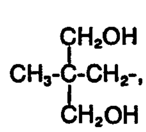, 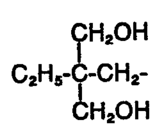 bevorzugt sind,

$R^5$ eine Alkylen- Cycloalkylen- oder Phenylengruppe ist,
mit der Massgabe, dass das Polyol mindestens drei Hydroxylgruppen aufweist,
wobei man das Alkoxysiloxan mit dem Polyol bis zu einem Umsetzungsgrad von $\leqq 70\%$ umsetzt, die Umsetzung jedoch mindestens so weit führt, dass eine klare Lösung erhalten wird. Vorzugsweise beträgt der Quotient $SiOR^1/C\text{–}OH = 0{,}8$ bis 1,2.

Das zur Umsetzung verwendete Alkoxysiloxan kann in an sich bekannter Weise hergestellt werden. Bevorzugt sind solche Polysiloxane, welche die Bedingung erfüllen, dass mindestens 50 Gew.-% der Formel $[R^2Si(OR^1)O]_n$, wobei n einen Wert von 3 bis 8 hat, entsprechen. Das eingesetzte Alkoxysiloxan oder zumindest seine überwiegende Menge ist deshalb relativ niedermolekular. Es enthält im allgemeinen etwa 80 Gew.-% Anteile, die bei einem verminderten Druck von etwa 1 bis 15 mbar destillierbar sind. Derartige Alkoxysiloxane entstehen z.B. bei der Hydrolyse und Kondensation der entsprechenden Alkoxysilane bei Temperaturen von etwa 60 °C.

Es war für den Fachmann überraschend, dass solche relativ niedermolekularen Alkoxysiloxane nach dem Umsatz mit Polyolen mit ausreichender Härtungsgeschwindigkeit vernetzt werden können.

$R^1$ ist eine niedere Alkylgruppe mit 1 bis 4 Kohlenstoffatomen, die geradkettig oder im Falle der höheren Kohlenstoffzahl verzweigt sein kann. $R^2$ ist eine Alkyl- oder Phenylgruppe. Als Alkylgruppe ist die Methylgruppe bevorzugt. Besonders günstige Ergebnisse werden erhalten, wenn man Alkoxysiloxane verwendet, bei denen mehr als 5% der Anzahl $R^2$-Gruppen Phenylgruppen sind.

Von erfindungswesentlicher Bedeutung ist jedoch auch die Auswahl des Polyols, welches mit dem Alkoxysiloxan umgesetzt wird. Diese Polyole sind ebenfalls niedermolekular. Das Polyol kann 3 bis 6 Hydroxylgruppen aufweisen. Das bedeutet, dass nur eine der Gruppen $R^3$ und $R^4$ die Bedeutung der Gruppe

$HO(CH_2)_2$-, 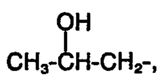 $HO(CH_2)_3$- oder

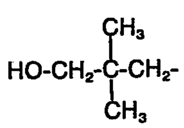

haben kann. Die beiden Estergruppen sind durch eine zweiwertige Kohlenwasserstoffbrücke miteinander verbunden. Die Brücke wird durch die Gruppe $R^5$ gebildet, wobei $R^5$ eine Alkylen-, Cycloalkylen- oder Phenylengruppe ist. Hat $R^5$ die Bedeutung einer Alkylengruppe, weist diese vorzugsweise 4 bis 7 Kohlenstoffatome auf. Besonders bevorzugt sind die 1.4- und die 1.3-Phenylengruppen. Als Cycloalkylengruppe ist die Cyclohexylengruppe bevorzugt. Herstellungsbedingt können in untergeordneter Menge auch Oligo-Esterpolyole dieser Verbindungen enthalten sein. Unter Oligo-Esterpolyolen sollen dabei solche Verbindungen verstanden werden, in denen die Dicarbonsäureeinheit mehr als einmal vorkommt.

Das Alkoxysiloxan und das Polyol werden vorzugsweise in solchen Mengen miteinander umgesetzt, dass der Quotient

$$\frac{SiOR^1}{COH} = 0{,}8 \text{ bis } 1{,}2 \text{ ist.}$$

Besonders bevorzugt ist ein Quotient von etwa 1.

Die Umsetzung der Reaktionspartner wird maximal bis zu einem Umsetzungsgrad von 70% geführt und dann abgebrochen. Die restliche Umsetzung und die damit verbundene Aushärtung des Produktes erfolgt auf der zu beschichtenden Oberfläche. Wählt man einen niedrigeren Umsetzungsgrad, so ist jedoch zu beachten, dass die Umsetzung so weit geführt sein muss, dass eine klare Lösung der Produkte ineinander erhalten wird. Diese Verträglichkeit hängt von der Art des verwendeten Alkoxysiloxans und des Polyols ab. Im allgemeinen werden die Ausgangsprodukte und die Umsetzungsprodukte miteinander bei einem Umsatz von etwa 40 bis 50% verträglich. Diese Lösungen bleiben dann auch nach dem Abkühlen noch klar.

Die Umesterung der Alkoxysiloxane und die Aushärtung erfolgen unter Verwendung von Katalysatoren. Aus dem Stand der Technik sind hierfür Titansäureester bekannt. Sie können auch beim erfindungsgemässen Verfahren eingesetzt werden. Beispiel eines solchen Titansäureesters ist Tetrabutyltitanat.

Dieser Katalysator kann auch für die Härtung des Verfahrensproduktes beim Einbrennen verwendet werden. Es hat sich jedoch gezeigt, dass besonders günstige Eigenschaften der eingebrannten Beschichtung dann erhalten werden, wenn man als Härtungskatalysator dem partiellen Umsetzungsprodukt eine Verbindung in Mengen von 0,2 bis 1,5 Gew.-%, bezogen auf Festharz, zusetzt, die durch Umsetzung von 2 Mol des Polyols der Formel

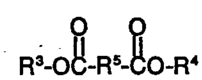

2 bis 4 Mol Phthalsäure- oder Trimellitsäureanhydrid und 1 Mol $Ti(OR^6)_4$ erhalten worden ist. $R^3$, $R^4$ und $R^5$ haben die bereits angegebene Bedeutung. Jedoch können $R^3$ und $R^4$ unabhängig von der Art der Gruppe gleich oder verschieden sein. Dabei ist jedoch die Bedingung zu erfüllen, dass das mit Anhydrid umgesetzte Polyol noch mindestens eine freie OH-Gruppe aufweist. $R^6$ ist dabei eine Alkylgruppe mit 1 bis 6 Kohlenstoffatomen. Bei Verwendung dieses Umsetzungsproduktes als Katalysator wird die Lagerstabilität der Harze, die Vernetzungsdichte der eingebrannten Harze, deren mechanische und chemische Belastbarkeit insbesondere durch wässrige Medien erhöht. Ein Vorteil des Katalysators ist auch seine gute Löslichkeit in dem partiellen Umsetzungsprodukt aus

Alkoxysiloxan und erfindungsgemäss zu verwendendem Polyol.

Die nach dem erfindungsgemässen Verfahren hergestellten hitzehärtbaren Siliconharze zeigen die geforderte niedrige Viskosität. Sie können durch geringe Zusätze üblicher Lösungsmittel, wie z.B. Ethylglykolacetat, Xylol, in eine gebrauchsfertige Form gebracht werden. Im allgemeinen genügen Zusätze von 20% Lösungsmittel, bezogen auf Festkörper. Die erfindungsgemäss hergestellten Harze härten bei Temperaturen von 200 °C in etwa 30 Minuten aus. Wird die Temperatur auf etwa 270 °C gesteigert, läuft die Härtung bereits innerhalb von 5 bis 10 Minuten ab. Die erhaltenen Überzüge haften gut auf metallischem Untergrund, sind elastisch und besonders thermisch belastbar. Die Wasser- und Detergentienfestigkeit der eingebrannten Filme, insbesondere bei Verwendung des vorzugsweise zu verwendenden Katalysators, sind ausgezeichnet.

Das erfindungsgemässe Verfahren soll durch die folgenden Beispiele noch näher erläutert werden.

Beispiel 1

a) Herstellung von Bis(2,2-dihydroxymethyl)butylterephthalat (BBT)

194 g (1 Mol) Dimethylterephthalat und 268 g (2 Mol) 2,2-Di(hydroxymethyl)butan(1)ol (Trimethylolpropan) werden in einem Kolben aufgeheizt. Bei Erreichen einer Temperatur von 140 °C werden 0,5 g Mg-Acetat zugesetzt. Nun wird innerhalb von 3 Stunden die Temperatur stetig auf 240 °C gesteigert. Während dieser Zeit werden insgesamt 64 g (2 Mol) Methanol abdestilliert. Der Kolbeninhalt wird langsam abgekühlt und bei Erreichen von 140 bis 150 °C mit 100 g Diglykoldimethylether versetzt. Nun wird auf Raumtemperatur gekühlt.

Das Produkt hat einen Festkörpergehalt von 80% und die OH-Zahl beträgt 560 mg KOH. Die gelchromatographische Analyse hat ergeben, dass 30% des Produktes aus Oligo-Esterpolyol mit mehr als einer Dicarbonsäureeinheit im Molekül bestehen.

b) Herstellung eines Phenylethoxypolysiloxans

240 g (1 Mol) Phenyltriethoxysilan werden mit katalytischen Mengen HCl und 100 g wasserfreiem Ethanol versetzt. Die Lösung wird unter Rühren auf 60 °C aufgeheizt. Bei dieser Temperatur wird ein Gemisch aus 162 g Ethanol und 18 g (1 Mol) Wasser innerhalb von 30 Minuten zugetropft. Anschliessend wird das überschüssige Ethanol unter vermindertem Druck abdestilliert.

Das Polymerengemisch hat einen mittleren Ethoxygehalt von 25%; 80% des Produktes sind bei 180 °C/2,6 mbar destillierbar; und dieses Produkt hat einen Ethoxywert von 27% und ein Molgewicht von 830. Es entspricht damit der Formel $C_6H_5$–$Si(OC_2H_5)O_5$.

c) Umsetzung von BBT mit dem Phenylethoxypolysiloxan

120 g Bis(2,2-dihydroxymethyl)butylterephthalat-Lösung (80%ig; 1 Mol C–OH) und 165 g des Phenylethoxypolysiloxans (100%ig; 0,9 Mol Si–$OC_2H_5$) werden mit 30 g Ethylglykolacetat und 5 g einer 10%igen Lösung von Tetrabutyltitanat in Butylacetat versetzt und auf 135 °C aufgeheizt. Innerhalb von einer halben Stunde werden 25 g Ethanol abdestilliert (Umsatz: 60%). Das Produkt wird rasch abgekühlt. Es besitzt eine Viskosität von 1200 $mm^2.sec^{-1}$/25 °C bei einem Festkörpergehalt von 80%, der mit Ethylglykolacetat eingestellt wird. Das Produkt ist farblos und völlig klar.

d) Herstellung eines Härtungskatalysators

30 g Bis(2,2-dihydroxymethyl)butylterephthalat-Lösung (80%ig; 0,06 Mol) werden mit 18 g Diglykoldimethylether versetzt und auf 130 °C aufgeheizt, darin 13,3 g Phthalsäureanhydrid (0,09 Mol) gelöst und die abgekühlte Lösung zu einer auf 130 °C aufgeheizten Lösung aus 10 g (0,03 Mol) Tetrabutyltitanat, gelöst in 8 g Diglykoldimethylether, langsam zugetropft. Während des Zutropfens wird Butanol abdestilliert. Unmittelbar nach dem Zutropfen beträgt die Destillatmenge 7 g, davon 3,9 g Butanol, was einem Umsatz von 45% der Theorie entspricht. Das Produkt wird abgekühlt.

e) Anwendungstechnische Prüfung

Je 100 g des nach c) hergestellten Siliconharzes werden mit 1) 0,5 g des nach d) hergestellten Härtungskatalysators bzw. 2) 0,7 g Tetrabutyltitanat, 10%ig in Butylglykol vermischt und mit 80 g $TiO_2$ pigmentiert. Die Lacke werden mit einer Rakel auf Aluminiumprüfbleche (Bonder 1401 AL) aufgebracht und nach einer Ablüftzeit von 10 Minuten in einem Ofen (Temperatur 270 °C) 10 Minuten lang ausgehärtet. Die Schichtdicke beträgt 30 bis 35 µm.

Die Prüfung ergibt folgende Werte:

| | 1) | 2) |
|---|---|---|
| Thermoplastizität (Bleistift-Härte nach Wolff-Wilborn) | | |
| bei 20° C | 3 H | 2 H |
| bei 150° C | 3 H | H B |
| Gilbung (b-Werte nach Hunter-Lab) | | |
| Nullprobe | −1,2 | −1,2 |
| nach 3 h/300 °C | +0,8 | +0,9 |
| Detergentienfestigkeit (3 h Einhängen der Prüfbleche in 3 %ige Waschmittellösung) | kein Angriff | schwacher Angriff (geringer Glanzverlust) |

In Thermoplastizität und Detergentienfestigkeit ist die mit dem Katalysator ausgehärtete Beschichtung deutlich besser. Die Gilbung ist erwartungsgemäss in beiden Fällen gleich.

Die obengenannten Beschichtungen werden wiederholt und unter Coil-Coating-Bedingungen (265 °C OT, 60 Sek.) ausgehärtet. Bei beiden Prüfblechen liegt die MEK-Beständigkeit bei >200 Doppelhüben. Die Flexibilität nach der ECCA-Norm beträgt in beiden Fällen 2 T. Damit ist deutlich gemacht, dass der Katalysator zwar zu verbesserten Gebrauchseigenschaften führt, nicht aber zu geringerer Flexibilität, wie bei erhöhter Vernetzungsdichte zu erwarten wäre.

Beispiel 2

Analog Beispiel 1 wird ein ethoxyfunktionelles Methylphenylpolysiloxan mit einem molaren Methyl/Phenyl-Verhältnis von 2 und einem R/Si-Verhältnis von 1 hergestellt. Das Polymerengemisch weist einen Ethoxygehalt von 32,5% auf. 75% des Produktes sind unter vermindertem Druck destillierbar und weisen einen Ethoxywert von 36% auf, was der Formel $[(CH_3)_{0,67}(C_6H_5)_{0,33}Si(OC_2H_5)O]_n$ entspricht.

Das Molgewicht liegt bei 680, woraus sich für n ein Wert von 5,5 ergibt.

Das Methylphenylpolysiloxan wird mit einem entsprechend dem Beispiel 1 a) aus 194 g (1 Mol) Dimethylisophthalat und 240 g (2 Mol) 2,2-Dimethylolpropan(1)ol (Trimethylolethan) hergestellten Polyol umgesetzt. Die 80%ige Lösung weist eine Viskosität von 2000 mm².sec⁻¹/25 °C auf und wird mit 0,5 g des nach Beispiel 1 d) hergestellten Härtungskatalysators versetzt, filtriert und entsprechend der in Beispiel 1 e) beschriebenen Weise anwendungstechnisch geprüft.

Ergebnis der Prüfung:

| | |
|---|---|
| Härte nach Wolff-Wilborn | |
| bei 20 °C | 3 H |
| bei 150 °C | 3 H |
| Detergentientest (3 h) | schwacher Angriff, leichter Glanzverlust |
| Gilbung (b-Werte) | |
| Nullprobe | −1,2 |
| nach 3 h/300 °C | +2,0 |

Beispiel 3

124 g eines ethoxyfunktionellen Methylpolysiloxans mit einem Methyl/Silicium-Verhältnis von 1, einem Ethoxygehalt von 40% und 75% destillierbaren Anteilen werden analog Beispiel 1 c) mit 115,6 g Bis(2,2-dihydroxymethyl)propylterephthalat (80%ig in Diglykoldimethylether; hergestellt aus Dimethylterephthalat und 2,2-Dihydroxymethylpropan(1)ol (Trimethylolethan) im molaren Verhältnis 1:2) umgesetzt. Der Umsatz beträgt 55% (berechnet aus der abdestillierten Menge Ethanol); das Produkt wird mit Ethylglykolacetat auf 80% Festkörpergehalt eingestellt und hat eine Viskosität von 1800 mm².sec⁻¹/25 °C.

Die anwendungstechnische Prüfung, analog der in Beispiel 1 e) beschriebenen Weise, liefert folgende Ergebnisse:

| | |
|---|---|
| Härte nach Wolff-Wilborn | |
| bei 20 °C | 7 H |
| bei 150 °C | 2 H |
| Detergentienfestigkeit (nach 3 h) | leichter Angriff, starker Glanzverlust |

Beispiel 4
(nichterfindungsgemässes Vergleichsbeispiel)

150 g eines Phenylmethoxypolysiloxans, das in seiner Zusammensetzung der Formel

$$C_6H_5\text{-}\underset{O_{\frac{2,2}{2}}}{\underset{|}{Si}}(OCH_3)_{0,8}$$

entspricht, eine Viskosität von 1500 mm².sec⁻¹/25 °C, sowie ein mittleres Molekulargewicht von 1200 aufweist und nur 45% destillierbare Anteile enthält, wird mit 150 g eines Polyesters umgesetzt, der aus 194 g (1 Mol) Dimethylterephthalat und 95 g (0,7 Mol) 2,2-Dihydroxymethylbutan(1)ol (Trimethylolpropan) und 27,6 g (0,6 Mol) Ethylenglykol hergestellt worden ist. Die OH-Zahl des Polyesters beträgt 320 mg KOH. Die gelchromatographische Analyse hat ergeben, dass 80% des Produktes aus Oligo-Esterpolyolen mit mehr als einer Dicarbonsäureeinheit im Molekül bestehen. Im Durchschnitt enthält das Produkt 3,3 Dicarbonsäureeinheiten pro Molekül. Die Umsetzung erfolgt wie in Beispiel 1 c) beschrieben. Das Produkt wird mit Ethylglykolacetat auf 60% Festkörper eingestellt und hat eine Viskosität von 1200 mm².sec⁻¹/25 °C.

100 g des Siliconharzes werden mit 0,7 g Tetrabutyltitanat, 10%ig in Butylglykol versetzt, mit 60 g $TiO_2$ pigmentiert.

Die anwendungstechnische Prüfung erfolgt in der in Beispiel 1 e) beschriebenen Weise.

Prüfergebnisse:

| | |
|---|---|
| Härte nach Wolff-Wilborn | |
| bei 20 °C | 3 H |
| bei 150 °C | F–H |
| Detergentienfestigkeit | leichter Angriff (Glanzverlust) |
| Gilbung | |
| Nullprobe | −1,2 |
| nach 3 h/300 °C | +0,9 |

Im Vergleich zu Beispiel 1, bei dem ebenfalls ein reines Phenylalkoxypolysiloxan verwendet wurde, wird insbesondere eine hohe Thermoplastizität der ausgehärteten Beschichtung beobachtet sowie eine nur schwache Detergentienfestigkeit gefunden.

**Patentansprüche**

1. Verfahren zur Herstellung eines in organischen Lösungsmitteln löslichen, hitzehärtbaren Siliconharzes durch partielle Umsetzung eines Alkoxysiloxans mit einem mindestens difunktionellen niedermolekularen Polyol, insbesondere in Gegenwart eines Katalysators, dadurch gekennzeichnet, dass man

a) als Alkoxysiloxane eine Verbindung der allgemeinen Formel

$$R^2_aSi(OR^1)_bO_{\frac{4-(a+b)}{2}} \quad ,$$

verwendet,
wobei

$R^1$ eine niedere Alkylgruppe mit bis zu 4 Kohlenstoffatomen,

$R^2$ eine Alkyl- oder Phenylgruppe,

a = 1,0 bis 1,2,

b = 0,5 bis 1,2 ist,

mit der Massgabe, dass mindestens 50 Gew.-% des Alkoxysiloxans bei 1 bis 15 mbar destillierbar sind und Siloxane, die der Formel $[R^2Si(OR^1)O]_n$, n = 3 bis 8, entsprechen, bevorzugt sind,

b) als Polyol eine Verbindung der allgemeinen Formel

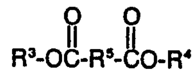

verwendet,
wobei

$R^3$ und $R^4$ gleich oder verschieden sind und die Gruppe

$HO(CH_2)_2$-, 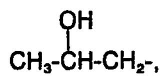 $HO(CH_2)_3$-, 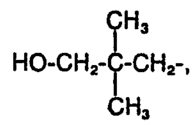

$(HOCH_2)_3C-CH_2$-, 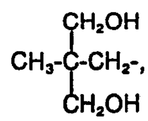 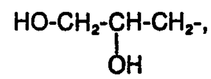

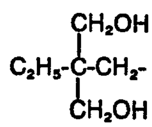 bedeuten,

$R^5$ eine Alkylen-, Cycloalkylen- oder Phenylengruppe ist,

mit der Massgabe, dass das Polyol mindestens drei Hydroxylgruppen aufweist,

wobei man das Alkoxysiloxan mit dem Polyol bis zu einem Umsetzungsgrad von ≦70% umsetzt, die Umsetzung jedoch mindestens so weit führt, dass eine klare Lösung erhalten wird.

2. Verfahren nach Anspruch 1, dadurch gekennzeichnet, dass man Alkoxysiloxane und Polyole in solchen Mengen einsetzt, dass der Quotient

$$\frac{SiOR^1}{COH} = 0{,}8 \text{ bis } 1{,}2 \text{ ist.}$$

3. Verfahren nach Anspruch 1, dadurch gekennzeichnet, dass man Alkoxysiloxane einsetzt, bei denen mehr als 5% der Anzahl $R^2$-Gruppen Phenylgruppen sind.

4. Verfahren nach Anspruch 1, dadurch gekennzeichnet, dass man Polyole einsetzt, bei denen $R^5$ eine 1.4- oder 1.3-Phenylengruppe ist.

## Claims

1. Process for the preparation of a thermosetting silicone resin, soluble in organic solvents, by partial reaction of an alkoxysilane with an at least difunctional low-molecular polyol, in particular in the presence of a catalyst, characterized in that

a) as the alkoxysilane, a compound of the general formula

$$R^2_aSi(OR^1)_bO_{\frac{4-(a+b)}{2}}$$

is used, in which

$R^1$ is a lower alkyl group having up to 4 carbon atoms,

$R^2$ is an alkyl or phenyl group,

a is 1.0 to 1.2,

b is 0.5 to 1.2,

with the proviso that at least 50% by weight of the alkoxysilane can be distilled at 1 to 15 mbar, and silanes corresponding to the formula $(R^2Si(OR^1)O)_n$, with n = 3 to 8, are preferred, and

b) as the polyol, a compound of the general formula

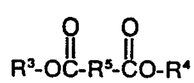

is used, in which

$R^3$ and $R^4$ are identical or different and represent the group

$HO(CH_2)_2$-, 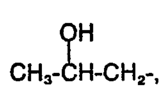 $HO(CH_2)_3$-, 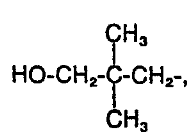

$(HOCH_2)_3C-CH_2$-, 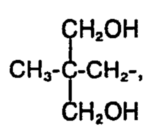 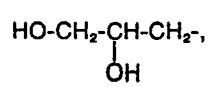 or 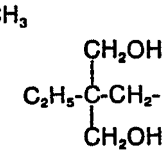

and $R^5$ is an alkylene, cycloalkylene or phenylene group, with the proviso that the polyol contains at least three hydroxyl groups, the alkoxysilane being reacted with the polyol up to a conversion of ≦70%, but the reaction being continued at least until a clear solution is obtained.

2. Process according to Claim 1, characterized in that alkoxysilanes and polyols are employed in such quantities that the quotient

$$\frac{SiOR^1}{COH} = 0{,}8 \text{ to. } 1{,}2.$$

3. Process according to Claim 1, characterized in that alkoxysilanes are employed in which more than 5% of the number of $R^2$ groups are phenyl groups.

4. Process according to Claim 1, characterized in that polyols are employed, in which $R^5$ is a 1,4- or 1,3-phenylene group.

**Revendications**

1. Procédé pour la préparation d'une résine de silicone thermodurcissable, soluble dans les solvants organiques, par la réaction partielle d'un alcoxysiloxane sur un polyol à faible masse moléculaire au moins bifonctionnel, en particulier en présence d'un catalyseur, caractérisé en ce que

a) on utilise comme alcoxysiloxanes un composé de formule générale

$$R^2_aSi(OR^1)_bO_{\frac{4-(a+b)}{2}}$$

dans laquelle

$R^1$ est un groupe alkyle inférieur ayant jusqu'à 4 atomes de carbone,

$R^2$ est un groupe alkyle ou phényle,

a = 1,0 à 1,2,

b = 0,5 à 1,2,

du moment qu'au moins 50% en poids de l'alcoxysiloxane sont distillables sous 1 à 15 mbar et que l'on préfère les siloxanes qui correspondent à la formule $(R^2Si(OR^1)O)_n$, n = 3 à 8,

b) on utilise comme polyol un composé de formule générale

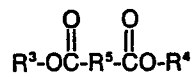

dans laquelle

$R^3$ et $R^4$ sont identiques ou différents et représentent le groupe

$HO(CH_2)_2$-, 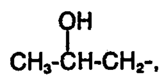 $HO(CH_2)_3$-, 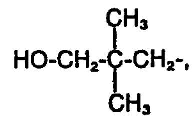

$(HOCH_2)_3C-CH_2$-, 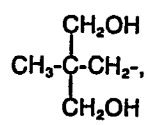 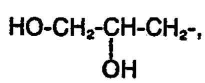 ou 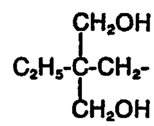

$R^5$ est un groupe alkylène, cycloalkylène ou phénylène, du moment que le polyol contient au moins trois groupes hydroxyle,

l'alcoxysiloxane étant mis à réagir avec le polyol jusqu'à un degré de transformation ≦70%, la réaction étant toutefois poursuivie au moins jusqu'à ce que l'on obtienne une solution limpide.

2. Procédé selon la revendication 1, caractérisé en ce qu'on utilise des alcoxysiloxanes et des polyols en des quantités telles que le quotient

$$\frac{SiOR^1}{COH} = 0{,}8 \text{ à } 1{,}2.$$

3. Procédé selon la revendication 1, caractérisé en ce qu'on utilise des alcoxysiloxanes dans lesquels plus de 5% du nombre des groupes $R^2$ sont des groupes phényle.

4. Procédé selon la revendication 1, caractérisé en ce qu'on utilise des polyols dans lesquels $R^5$ est un groupe 1,4- ou 1,3-phènylène.